# EUROPÄISCHE PATENTSCHRIFT

(11) **EP 3 743 666 B1**
(45) Veröffentlichungstag und Bekanntmachung des Hinweises auf die Patenterteilung: **15.11.2023**
(21) Anmeldenummer: 19701113.3
(22) Anmeldetag: 24.01.2019
(51) Int. Cl.: F28F 3/00, F28D 9/00, F28D 21/00

(54) **DOSIERMODUL MIT EINER TEMPERIERBAREN DOSIEREINRICHTUNG UND VERFAHREN ZUM TEMPERIEREN EINER DOSIEREINRICHTUNG**
METERING MODULE WITH A TEMPERABLE DOSING DEVICE AND METHOD FOR CONTROLLING THE TEMPERATURE OF A METERING DEVICE
MODULE DE DOSAGE POURVU D'UNE UNITÉ DE DOSAGE POUVANT ÊTRE THERMORÉGLÉE ET PROCÉDÉ DE THERMORÉGLAGE D'UN DISPOSITIF DE DOSAGE

(30) Priorität: 25.01.2018 EP 18153425
(43) Veröffentlichungstag der Anmeldung: 02.12.2020
(73) Patentinhaber: Suzhou Skywell Healthcare Information Co., Ltd., Jiangsu 215021 (CN)
(72) Erfinder: GÜNTHER, Dietmar, 42499 Hückeswagen (DE); FLEISCHER-TREBES, Christoph, 45131 Essen (DE); NIESEN, Mike, 51061 Köln (DE)
(74) Vertreter: Lahrtz, Fritz
(86) Internationale Anmeldenummer: PCT/EP2019/051705
(87) Internationale Veröffentlichungsnummer: WO 2019/145396

(56) Entgegenhaltungen:
- WO-A1-2013/097861
- WO-A2-2010/040787
- DE-A1-102005 055 284
- DE-A1-102008 039 490
- DE-A1-102009 060 398
- DE-B3-102006 029 821
- DE-T5-112016 001 000
- DE-U1-202007 006 450
- US-A1- 2016 320 077

## Beschreibung

Die Erfindung betrifft ein Dosiermodul, insbesondere für eine modular aufgebaute Prozessanlage, mit einem Dosiersystem zum Dosieren eines Fluides, einem das Dosiersystem zumindest teilweise einhausenden Gehäuse sowie einer Temperiereinrichtung zum Temperieren des Inneren des Gehäuses. Des Weiteren betrifft die Erfindung eine modular aufgebaute Prozessanlage für die Produktion eines chemischen und/oder pharmazeutischen Produktes, mit einem oder mehreren derartigen Dosiermodulen sowie ein Verfahren zum Temperieren einer Dosiereinrichtung zum Dosieren von Flüssigkeiten.

Die Druckschrift WO 2007/057432 A1 zeigt einen Probennehmer zur automatischen Entnahme von Flüssigkeitsproben aus einer Probenentnahmestelle. Dieser Probennehmer umfasst (i) eine Probenentnahmeeinheit mit einer Dosiereinrichtung, (ii) eine Probensammeleinheit zur Lagerung entnommener Proben, (iii) ein Gehäuse, welches die Probenentnahmeeinheit sowie die Probensammeleinheit einhaust, sowie (iv) eine Temperiereinheit zum Temperieren von Komponenten des Probennehmers im Inneren des Gehäuses.

Unter dem Begriff "Temperieren" ist im Zusammenhang mit der vorliegenden Erfindung "etwas auf eine bestimmte Temperatur zu bringen" zu verstehen. Dies kann je nach Soll- und Ist-Wert der Temperatur durch Heizen bzw. Kühlen geschehen. Das Temperieren kann dabei beispielsweise über eine Temperiereinrichtung und/oder über ein separates, externes Temperiergerät geschehen, wobei die zu übertragende Temperatur der Temperiereinrichtung und/oder des Temperiergeräts durch ein sich in einem Kreislauf mit dem Dosiersystem befindlichen Temperiermedium auf das Dosiersystem übertragen wird. Das Dokument DE102009060398A zeigt ein Dosiermodul mit den Merkmalen der Präambel.

Aufgabe der Erfindung ist es, Maßnahmen anzugeben, die ein Dosieren von Fluiden mit gegenüber der Umgebungstemperatur abweichenden Temperaturen möglichst effektiv ermöglichen.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils für sich genommen oder in beliebiger Kombination miteinander einen Aspekt der Erfindung darstellen können.

Bei dem erfindungsgemäßen Dosiermodul zum Dosieren eines Fluides, mit einem Dosiersystem, einem das Dosiersystem zumindest teilweise einhausenden Gehäuse sowie einer Temperiereinrichtung zum Temperieren des Inneren des Gehäuses, ist vorgesehen, dass die Temperiereinrichtung einen Plattenwärmetauscher aufweist und zumindest ein Teil des Gehäuses von zumindest einer Plattenstruktur dieses Plattenwärmetauschers gebildet wird. Dieses vorgeschlagene temperierte Dosiersystem mit Einhausung folgt der Überlegung, die zu temperierenden Systemkomponenten so weit als möglich im eingehausten Bereich temperiert zu halten und auf eine Temperierung der Einzelkomponenten - wo es geht - zu verzichten. Auf diese Weise kann eine platzsparende und modulare Bauweise erreicht werden, die eine effektive Integration unterschiedlicher Systemkomponenten erlaubt.

Ein Plattenwärmetauscher (PWT)- oft auch als Plattenwärmeübertrager (PWÜ) oder Plattenkühler (PK) bezeichnet - ist eine spezielle Bauform eines Wärmeübertragers mit einer Plattenstruktur, beispielsweise einem Plattenstapel aus profilierten Platten, die so zusammengesetzt sind, dass jeweils in den aufeinanderfolgenden Zwischenräumen einmal das aufzuwärmende und danach das wärmeabgebende Medium fließt.

Als Plattenwärmetauscher wird zur Realisierung der Erfindung vorteilhaft das WTP-System (Wärmeaustauschplatten-System), beispielsweise der LOB GmbH, eingesetzt. Die Plattenstruktur dieses WTP-Systems wird auch als Wärmetauscherplatte bezeichnet. Das Prinzip des WTP-Systems beruht darauf, dass auf ein Trägerblech / eine Trägerplatte ein bis zu 2 mm dickes Blech aufgebracht und mittels Laserschweißung verbunden wird. Die Laserschweißung bildet Strömungskanäle für das Temperiermedium. Nach der Schweißung werden diese Kanäle durch Innendruck aufgeweitet, wodurch gleichmäßige Hohlräume entstehen. Durch diese Hohlräume kann dann das Temperiermedium geleitet werden. Entsprechend ihrer Herstellweise entsprechen diese Hohlräume im Querschnitt keinen ebenen geometrischen Formen wir z.B. Polygone (Dreieck, Viereck, usw.) oder Kreisen. Entsprechend sind die Kanäle der Wärmetauscherplatte z.B. keine Rohre bzw. Rohrleitungen. Durch das Prinzip lassen sich sowohl Bohrungen und andere Aussparungen als auch nahezu beliebige Außenkonturen des WTP-Systems realisieren (siehe auch http://www.lob-gmbh.de/de/wtp-system/index.html#). Das WTP-System ist auch unter den Bezeichnungen "Pillow Plate" und "Thermoblech" bekannt. Der prinzipielle Aufbau des WTP-Systems der LOB GmbH wird u.A. in der Patentschrift DE 10 2006 029 821 B3 beschrieben. Das zu dosierende "Fluid" oder auch "Prozessfluid" ist in der Regel eine Flüssigkeit, kann aber auch ein Flüssigkeits-Gas-Gemisch oder gasförmig sein. Die durch das Temperieren zu erreichende Temperatur wird in der Regel durch das zu dosierende Fluid bestimmt. Das Fluid kann beispielsweise eine Flüssigkeit sein, deren Erstarrungspunkt oberhalb der Raumtemperatur liegt. In diesem Fall muss zum Temperieren geheizt werden.

In einigen Fällen ist es ungünstig das gesamte Dosiersystem zu temperieren, da die vom zu dosierenden Fluid vorgegebene Temperatur für Teile des Dosiersystems ungeeignet ist. In diesem Fall wir das Dosiersystem nur teilweise eingehaust, sodass diese Teile des Dosiersystems außerhalb des temperierten Gehäuses liegen.

Gemäß der Erfindung ist vorgesehen, dass das Dosiersystem mehrere über ein Rohrleitungssystem miteinander strömungstechnisch verschaltete Systemkomponenten aufweist. Eine typische Systemkomponente des Dosiersystems ist beispielsweise eine (Dosier-)Pumpe. Diese ist über Rohrleitungen des Rohrleitungssystems innerhalb des Moduls strömungstechnisch verschaltet.

In einer bevorzugten Ausführungsform der Erfindung ist vorgesehen, dass zumindest eine Systemkomponente des Dosiersystems an der oder zumindest einer der den Teil des Gehäuses bildenden Plattenstrukturen des Plattenwärmetauschers unmittelbar befestigt ist. In einer bevorzugten Ausführungsform der Erfindung ist vorgesehen, dass zumindest eine Systemkomponente des Dosiersystems an der oder zumindest einer der den Teil des Gehäuses bildenden Wärmetauscherplatte unmittelbar befestigt ist.

Da die Antriebsmotoren üblicher Pumpen in der Regel nicht für den Einsatz bei hohen Temperaturen ausgelegt sind, wird eine Anordnung der Pumpe so vorgeschlagen, dass sich der Pumpenkopf im temperierten Gehäuse befindet und der Motor außerhalb. Um die Wärmeleitung aus der Wärmetauscherplatte in den Pumpenkopf zu unterstützen ist eine besonders vorteilhafte Anordnung die Anbringung der Pumpe über den Flansch des Pumpenkopfs direkt an der Wärmetauscherplatte.

Wenn möglich sollte ein Temperieren des Dosiersystems ausschließlich über das temperierte Gehäuse erfolgen. Lediglich zur Ergänzung -zum Beispiel nach einem Umbau des Moduls- sind weitere Temperiermaßnahmen denkbar. Zu diesem Zweck ist dann mit Vorteil vorgesehen, dass zumindest ein Teil der Rohrleitungen des Rohrleitungssystems als medientemperierbare (medienbeheizbare) Rohrleitungen ausgebildet ist und/oder zumindest eine der Systemkomponenten medientemperierbar (medienheizbar) ist. Die medientemperierbaren Rohrleitungen und/oder Systemkomponenten können im allgemeinen auch durch ein externes Temperiergerät temperiert werden. Entsprechende medienbeheizte Rohrleitungen sind bekannt und werden unter anderem von dem Anbieter Swagelok als Bündelrohre mit Dampfbegleitheizung angeboten. Medienbeheizte Pumpen sind ebenfalls bekannt. So bietet zum Beispiel der Anbieter Gather eine entsprechende Manschette zum Beheizen von Pumpenköpfen an. Entsprechende Rohrleitungen, Manschetten, etc. können natürlich auch zum Kühlen genutzt werden.

Gemäß einer weiteren bevorzugten Ausführungsform der Erfindung ist vorgesehen, dass die Systemkomponenten des Dosiersystems zumindest eine der folgenden Komponenten umfasst: eine (Dosier-)Pumpe, einen Filter, ein Absperrventil, eine Druckmesseinrichtung, eine Temperaturmesseinrichtung, eine Durchflussmesseinrichtung und ein Ablassventil. In einer besonders bevorzugten Ausführungsform sind alle diese Systemkomponenten vorgesehen. Die Messeinrichtungen, Ventile, etc. können natürlich auch zur Temperatursteuerung beziehungsweise -regelung mittels der Temperiereinrichtung genutzt werden und sind in diesem Fall dann Teil dieser Einrichtung.

In einer bevorzugten Ausführungsform der Erfindung ist vorgesehen, dass mehrere Systemkomponenten des Dosiersystems an der oder zumindest einer der den Teil des Gehäuses bildenden Plattenstrukturen des Plattenwärmetauschers unmittelbar befestigt sind.

In einer bevorzugten Ausführungsform der Erfindung ist vorgesehen, dass mehrere Systemkomponenten des Dosiersystems an der oder zumindest einer der den Teil des Gehäuses bildenden Wärmetauscherplatte unmittelbar befestigt sind. In einer besonders bevorzugten Ausführungsform der Erfindung ist vorgesehen möglichst viele der Systemkomponenten des Dosiersystems an der oder zumindest einer der den Teil des Gehäuses bildenden Wärmetauscherplatte zu befestigen. In einer weiteren bevorzugten Ausführungsform der Erfindung ist vorgesehen alle Systemkomponenten des Dosiersystems, ausgenommen die Rohrleitungen, an der oder zumindest einer der den Teil des Gehäuses bildenden Wärmetausherplatte zu befestigen. Erforderliche Bohrungen für Flansche, Befestigungen usw. lassen sich mit in der Wärmetauscherplatte durch entsprechende Lage der Schweißnähte berücksichtigen und die Kanäle für das Temperiermedium in der Wärmetauscherplatte strömungstechnisch und hinsichtlich des Wärmeübergangs optimal auslegen. Der Wärmeübergang einer solchen Platte ist Prinzip bedingt höher als derjenige für beispielsweise eine Platte mit befestigten Rohrleitungen.

Die Werkstoffe der Wärmetauscherplatte des WTP-Systems können so gewählt werden, dass sie für Prozessanlagen für die Produktion eines chemischen und/oder pharmazeutischen Produktes geeignet und zuverlässig einsetzbar sind.

In der beschriebenen bevorzugten Ausführungsform der Erfindung werden die Wärmetauscherplatten nach dem WTP-System als tragende Elementen für die zu temperierenden Komponenten des modularen Dosiersystems eingesetzt. Tragende Elemente bedeutet hierbei, dass die Wärmetauscherplatten Systempomponenten halten und keine weiteren Halter benötigt werden, die mit anderen Gehäuseteilen zu verbinden wären.

Zur Ausbildung des Gehäuses weist das Modul neben der Plattenstruktur des Plattenwärmetauschers insbesondere noch folgende weitere Komponenten auf: ein Gestell, Gehäuseteile und Elemente zur thermischen Isolierung (kurz Wärmeisolierung). Das Gestell ist dabei bevorzugt so ausgestaltet, dass es auch weitere Modul-Komponenten außerhalb des Gehäuses tragen kann.

Insbesondere weist das Modul weiterhin einen Druckbehälter für das Prozessfluid und/oder eine Elektronikeinheit auf. Vorzugsweise kann der Druckbehälter temperierbar sein, z.B. durch ein externes Temperiergerät. Das Prozessfluid wird vom Druckbehälter in die Systemkomponenten des Dosiersystems eingebracht und dann schlussendlich temperiert bzw. wenn das Prozessfluid im Druckbehälter auf die gewünschte Temperatur temperiert wurde, auf Temperatur gehalten. Diese Elektronikeinheit ist insbesondere eine als Remote I/O Controller bezeichnete Elektronikeinheit, also ein Gerät zur Fernabfrage und zum Schalten über weite Entfernungen via Netzwerkverbindung (z.B. Ethernet- bzw. Internetverbindung). Über diese Elektronikeinheit wird unter anderem die Temperiereinrichtung gesteuert beziehungsweise geregelt. Vorzugsweise steuert bzw. regelt die Elektronikeinheit die Versorgung der Temperiereinrichtung mit dem Temperiermedium des externen Temperiergeräts.

Bei der erfindungsgemäßen modular aufgebauten Prozessanlage für die Produktion eines chemischen und/oder pharmazeutischen Produktes mit mehreren Modulen, ist vorgesehen, dass zumindest eines dieser Module als vorstehend genanntes Dosiermodul ausgebildet ist. Die Module weisen insbesondere fest vorgegebene, auf einander abgestimmte Maße auf.

Die Erfindung betrifft weiterhin ein Verfahren zum Temperieren eines Dosiersystems zum Dosieren von Fluiden innerhalb eines Dosiermoduls, umfassend die Schritte: a) Bereitstellen eines Dosiermoduls umfassend ein Dosiersystem, das zumindest teilwese von einem Gehäuse eingehaust wird, wobei zumindest ein Teil des Gehäuses von zumindest einer Plattenstruktur eines das Innere des Gehäuses temperierenden Plattenwärmetauschers gebildet wird; b) bereitstellen eines Temperiermediums zur Temperierung des Plattenwärmetauschers, welches sich in einem Kreislauf mit dem Dosiersystem befindet; c) temperieren des Temperiermediums. Der Plattenwärmetauscher umfasst Hohlräume bzw. Strömungskanäle durch die das Temperiermedium geleitet wird, wodurch das Innere des Gehäuses und somit das Dosiersystem temperiert werden kann. Bevorzugt handelt es sich bei der Plattenstruktur des Plattenwärmetausches um eine Wärmetauscherplatte. Bevorzugt geschieht das Temperieren über eine Temperiereinrichtung und ein externes Temperiergerät.

Eine bevorzugte Ausführungsform des erfindungsgemäßen Verfahrens umfasst die Schritte: a) Bereitstellen eines Dosiermoduls umfassend ein Dosiersystem, das zumindest teilwese von einem Gehäuse eingehaust wird, wobei zumindest ein Teil des Gehäuses von zumindest einer Wärmetauscherplatte eines das Innere des Gehäuses temperierenden Plattenwärmetauschers gebildet wird; b) bereitstellen eines Temperiermediums zur Temperierung des Plattenwärmetauschers, welches sich in einem Kreislauf mit dem Dosiersystem befindet; c) temperieren des Temperiermediums durch ein externes Temperiergerät.

Bei bekannten Abmessungen des das Gehäuse temperierenden Plattenwärmetauschers, der Isolierung, der anderen temperaturrelevanten Komponenten und Kenngrößen sowie der angestrebten und zu erwartenden Temperaturren lässt sich der Wärmebedarf in der Entwurfsphase des Systems berechnen.

Bevorzugte Ausführungsformen des erfindungsgemäßen Verfahrens ergeben sich analog zu den vorstehend genannten Maßnahmen bezüglich des Dosiermoduls.

Nachfolgend wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
- Figur 1:: eine schematische Darstellung von Komponenten eines erfindungsgemäßen Dosiermoduls gemäß einer bevorzugten Ausführungsform der Erfindung,
- Figur 2:: die Komponenten eines Gehäuses für das in Figur 1 gezeigte Dosiermodul,
- Figur 3:: das komplette Dosiermodul in einer Vorderansicht und
- Figur 4:: das komplette Dosiermodul in einer rückwärtigen Ansicht.
- Figur 5:: das Fließbild für das Dosiermodul

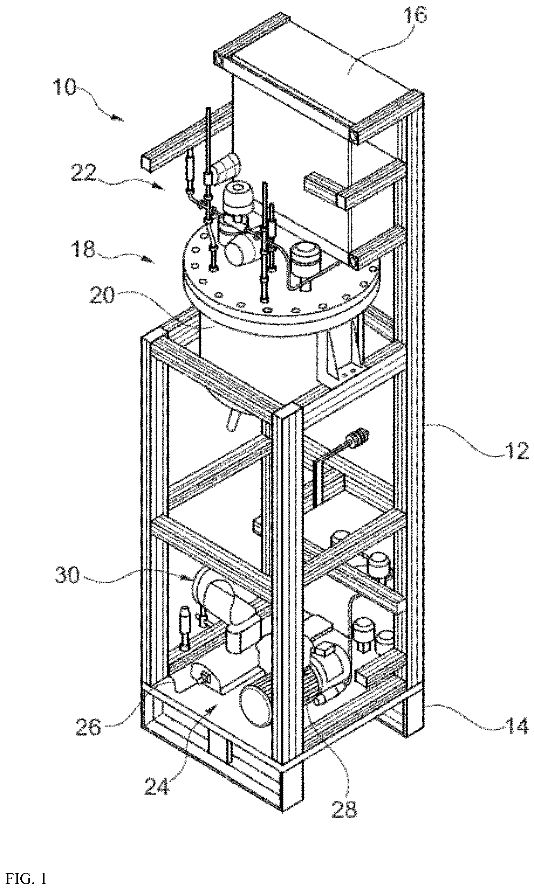

Die Figur 1 zeigt ein Ausführungsbeispiel eines Dosiermoduls 10 für eine modular aufgebaute Prozessanlage. Das Dosiermodul umfasst ein Gestell 12, auf bzw. in dem die weiteren Komponenten des Moduls 10 montiert sind. Das Gestell 12 selbst ist auf einer Palette 14 angeordnet. Die weiteren Komponenten des Dosiermoduls lassen sich wie folgt aufteilen: eine als Remote I/O Controller ausgebildete Elektronikeinheit 16, die im oberen Bereich des Gestells 12 angeordnet ist, eine Druckbehältereinheit 18 mit einem Druckbehälter 20 und entsprechender Peripherie 22, wobei der Druckbehälter 20 unterhalb und die Peripherie neben der Elektronikeinheit 16 angeordnet ist und ein Dosiersystem (eine Dosierbaugruppe) 24 in einem unteren Bereich des Moduls 10. Das Dosiersystem 24 umfasst ein Rohrleitungssystem 26 mit diversen Rohrleitungen, eine im Rohrleitungssystem 26 verschaltete Pumpe 28 und andere Systemkomponenten 30 des Dosiersystems 24, wie etwa Filter, Absperrventile, Druckmesseinrichtungen, eine Temperaturmesseinrichtung, eine Durchflussmesseinrichtung und ein Ablassventil zu einer Abfallleitung, auf die hier im Einzelnen jedoch nicht eingegangen werden soll und die daher in Summe das Bezugszeichen 30 erhalten.

Das Dosiermodul 10 weist weiterhin ein das Dosiersystem 24 zumindest teilweise einhausendes Gehäuse 32 sowie eine als Plattenwärmetauscher 34 ausgebildete Temperiereinrichtung zum Temperieren des Inneren des Gehäuses 32 auf. Die als Remote I/O Controller ausgebildete Elektronikeinheit 16 ist ein Gerät zur Fernabfrage und zum Schalten über weite Entfernungen via Netzwerkverbindung (z.B. Ethernet- bzw. Internetverbindung). Über diese Elektronikeinheit 16 wird unter anderem auch die Temperiereinrichtung gesteuert beziehungsweise geregelt. Die Temperierung der als Plattenwärmetauscher 34 ausgebideten Temperiereinrichtung erfolgt vorzugsweise durch ein seperates, externes Temperiergerät (nicht in der Abbildung dargestellt). Die Elektronikeinheit 16 kann vorzugsweise auch dieses separate, externe Temperiergerät steuern beziehungsweise regeln.

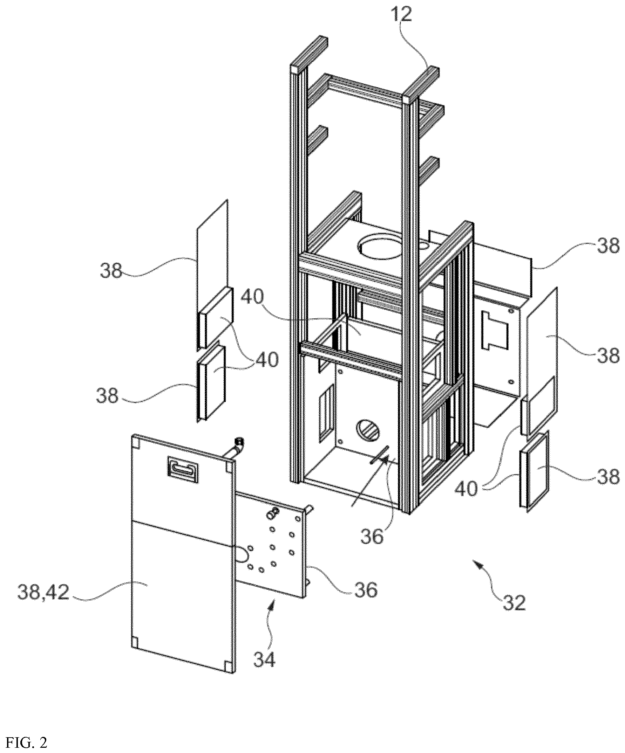

Die Figur 2 zeigt die einzelnen Komponenten des Gehäuses 32 sowie eine zentrale Komponente des als WTP-System ausgebildeten Plattenwärmetauschers 34, nämlich eine Wärmetauscherplatte 36 dieses WTP-Systems. Die Wärmetauscherplatte 36 ist dabei so angeordnet, dass sie eine Wand des Gehäuses 32 bildet beziehungsweise mitbildet. Neben dieser Wärmetauscherplatte 36 umfasst das Gehäuse 32 weiterhin noch Gehäuseteile 38 und Elemente 40 zur thermischen Isolierung (kurz Wärmeisolierung genannt).

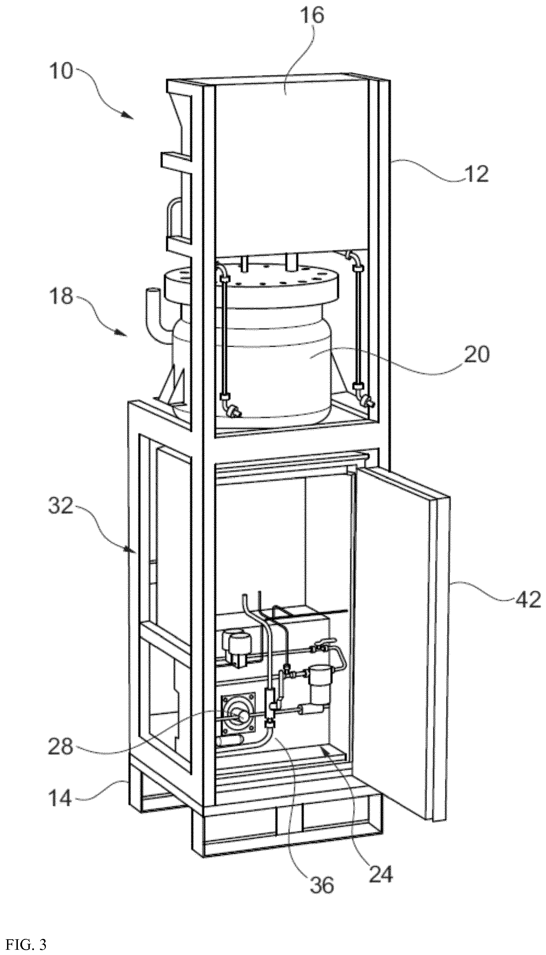

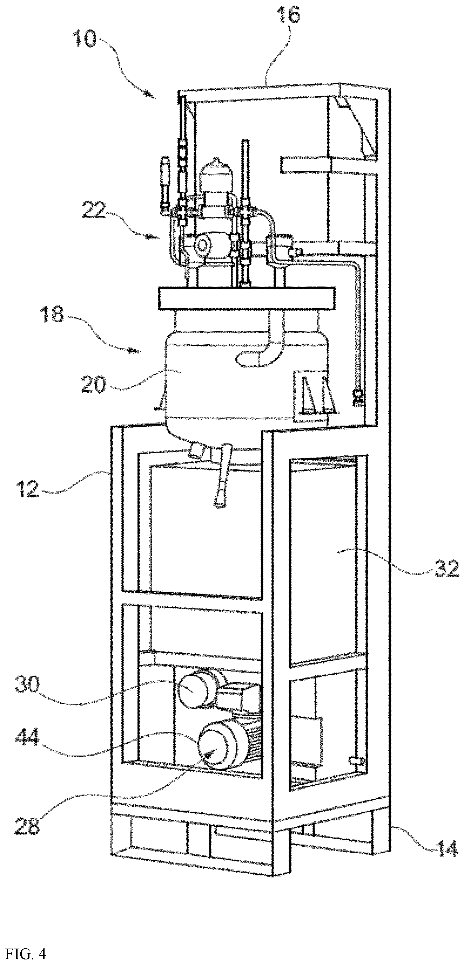

Die Figuren 3 und 4 zeigen nun das komplette Dosiermodul 10. Die Figur 3 zeigt eine Vorderansicht, bei der man auf eine geöffnete Tür 42 des Gehäuses 32 schaut und die Figur 4 zeigt eine Ansicht der Rückseite, bei der man erkennen kann, dass Teile der Pumpe 28, nämlich deren Pumpenantrieb 44, und Teile der Durchflussmesseinrichtung 30 aus dem Gehäuse 32 herausragen. Dazu weist die entsprechende Gehäusewand Durchbrüche (Öffnungen) auf. Diese Wand ist im Übrigen der von der Wärmetauscherplatte 36 (mit-)gebildete Teil des Gehäuses 32.

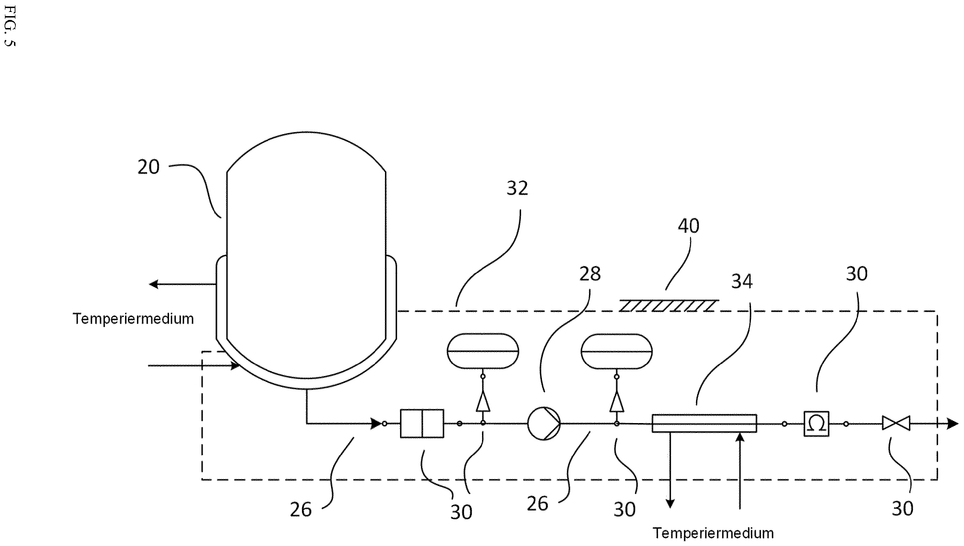

Das Fließbild in Figur 5 zeigt ebenfalls ein Ausführungsbeispiel eines Dosiermoduls 10 für eine modular aufgebaute Prozessanlage. Dargestellt sind u. a. eine Druckbehältereinheit 18 mit einem Druckbehälter 20, das Dosiersystem 24, bestehend aus Rohrleitungssystem 26 mit diversen Rohrleitungen, eine im Rohrleitungssystem 26 verschaltete Pumpe 28 und andere Systemkomponenten 30 des Dosiersystems 24, wie etwa Filter, Absperrventile, Druckmesseinrichtungen, eine Temperaturmesseinrichtung, eine Durchflussmesseinrichtung und ein Ablassventil zu einer Abfallleitung.

Unterhalb der Druckbehältereinheit 18 ist der Übergang des Prozessfluids in den beheizten Modulraum dargestellt. Die Temperierung der Wärmetauscherplatte 36 erfolgt vorteilhaft über ein externes Temperiergerät, dass über die als Remote I/O Controller ausgebildete Elektronikeinheit 16 gesteuert oder geregelt werden kann.

Im Folgenden sollen die diversen Aspekte der Erfindung sowie deren Vorteile noch einmal beschrieben werden:
Das Dosiersystem 24, in der Regel bestehend aus Pumpe 28, Rohrleitungen 26, Filtern, Durchflussmesser, Ventilen und Sensoren 30 wird als kompakte Anordnung aufgebaut und -zumindest größtenteils - in dem von der Umgebung abgrenzbaren/abgegrenzten Gehäuse 32 angeordnet. Mindestens eine Wand des Gehäuses 32 ist als temperierbare Wärmetauscherplatte 36 ausgeführt, die dem Innenraum des Gehäuses 32 die Energie entzieht bzw. zuführt, die durch Wärmeaustausch mit der Umgebung oder mit angeschlossenen Komponenten zu- bzw. abgeführt wird. Die Wandungen des Gehäuses 32 sind zweckmäßigerweise mit Wärmeisolierung 40 ausgeführt.

Die Temperatur des Prozessfluids kann über Sensoren in den Rohrleitungen 26 gemessen und zur Regelung der Temperatur des Temperiermediums für die als Plattenwärmetauscher 34 ausgebideten Temperiereinrichtung herangezogen werden.

Auch die gewünschte Temperatur im Gehäuse 32 kann gemessen und zur Regelung der Temperatur des Temperiermediums für die als Plattenwärmetauscher 34 ausgebideten Temperiereinrichtung mit herangezogen werden.

Das vorgeschlagene temperierte Dosiersystem 24 mit Einhausung folgt der Rationale, die zu temperierenden Komponenten 26, 28, 30 so weit als möglich im eingehausten Bereich so temperiert zu halten, dass die gewünschte Temperatur des Prozessfluids in vorgegebenen Grenzen gehalten wird und auf die gesonderte Temperierung der Einzelkomponenten möglichst zu verzichten. Dies ermöglicht eine platzsparende modulare Bauweise und ein effektives Temperieren.

Für den Einsatz in explosionsgeschützten Bereichen wird die Ausführung der Gehäuseteile aus einem ableitfähigen Material (z.B. Blechen) vorgeschlagen, die an dem (Rahmen-)Gestell 12 befestigt werden können (z.B. geschraubt). Die als Bleche ausgebildeten Gehäuseteile 38 können auf der Gehäuseinnenseite mit den Elementen 40 zur Wärmeisolierung beschichtet sein (z. B. durch Kleben), ebenso können Verbundmaterialien eingesetzt werden.

Da die Pumpenantriebe 44, also die Antriebsmotoren, üblicher Pumpen 28 in der Regel nicht für den Einsatz bei hohen Temperaturen ausgelegt sind, wird eine Anordnung der Pumpe 28 so vorgeschlagen, dass sich der Pumpenkopf im temperierten Gehäuse 32 befindet und der Motor außerhalb. Um die Wärmeleitung aus der Wärmetauscherplatte 36 in den Pumpenkopf zu unterstützen ist eine besonders vorteilhafte Anordnung die Anbringung der Pumpe 28 über den Flansch des Pumpenkopfs direkt an der Wärmetauscherplatte 36.

Da auch die Auswerteelektronik von Durchflussmesseinrichtungen 30 in der Regel nicht für den Einsatz bei hohen Temperaturen ausgelegt sind, wird eine Anordnung so vorgeschlagen, dass sich auch die Elektronik außerhalb des temperierten Gehäuses 32 befindet. Um die Wärmeleitung aus der Wärmetauscherplatte 36 in den das Fluid führenden Teil des Durchflussmessers 30 zu unterstützen ist eine besonders vorteilhafte Anordnung die Anbringung an der Außenseite der Wärmetauscherplatte 36.

Bezüglich der Sensoren und Aktoren sind solche zu bevorzugen, die für den Temperaturbereich innerhalb der Einhausung durch das Gehäuse 32 zugelassen sind. Falls nicht, sind die Flüssigkeit führenden Teile der Sensoren und Aktoren innerhalb des temperierten Gehäuses 32 anzuordnen und die Auswerte- bzw. Ansteuerkomponenten außerhalb.

Als Plattenstruktur 36 ist vorteilhaft eine Wärmetauscherplatte 36 eines flachbauenden WTP-Systems z. B. der LOB GmbH, Köln einsetzbar, welches das Einbringen von Bohrungen zur Befestigung von Pumpenköpfen und anderen zu temperierenden Komponenten direkt auf der Wärmetauscherplatte 36 ermöglicht.

## Patentansprüche

1. Dosiermodul (10), insbesondere für eine modular aufgebaute Prozessanlage, mit einem Dosiersystem (24) zum Dosieren eines Fluides, einem das Dosiersystem (24) zumindest teilweise einhausenden Gehäuse (32) sowie einer Temperiereinrichtung zum Temperieren des Inneren des Gehäuses (32), wobei die Temperiereinrichtung einen Plattenwärmetauscher (34) aufweist und zumindest ein Teil des Gehäuses (32) von zumindest einer Plattenstruktur (36) dieses Plattenwärmetauschers (34), insbesondere von zumindest einer sogenannten Wärmetauscherplatte, gebildet wird, wobei das Dosiersystem (24) mehrere über ein Rohrleitungssystem (26) miteinander strömungstechnisch verschaltete Systemkomponenten (28, 30) aufweist und eine Pumpe (28) ein Teil der Systemkomponenten darstellt, **dadurch gekennzeichnet, dass** sich der Pumpenkopf der Pumpe (28) im Inneren des Gehäuses (32) befindet und der Motor der Pumpe (28) außerhalb.

2. Modul nach Anspruch 1, **dadurch gekennzeichnet, dass** zumindest eine Systemkomponente (28, 30) des Dosiersystems (24) unmittelbar an der oder an zumindest einer der den Teil des Gehäuses (32) bildenden Plattenstrukturen (36) des Plattenwärmetauschers (34) befestigt ist.

3. Modul nach Anspruch 1 oder 2, **dadurch gekennzeichnet, dass** zumindest ein Teil der Rohrleitungen des Rohrleitungssystems (36) als medientemperierbare Rohrleitungen ausgebildet ist und/oder zumindest eine der Systemkomponenten (28, 30) medientemperierbar ist.

4. Modul nach einem der Ansprüche 1 bis 3, **dadurch gekennzeichnet, dass** die Systemkomponenten (28, 30) des Dosiersystems (24) zumindest eine der folgenden Komponenten umfasst: eine Pumpe (28), einen Filter, ein Absperrventil, eine Druckmesseinrichtung, eine Temperaturmesseinrichtung, eine Durchflussmesseinrichtung und ein Ablassventil (30).

5. Modul nach einem der vorhergehenden Ansprüche, **dadurch gekennzeichnet, dass** das Dosiermodul (10) neben der Plattenstruktur (36) des Plattenwärmetauschers (34) folgende weitere Komponenten zur Ausbildung des Gehäuses aufweist: ein Gestell (12), Gehäuseteile (38) und Elemente (40) zur thermischen Isolierung.

6. Modul nach einem der vorhergehenden Ansprüche, **dadurch gekennzeichnet, dass** das Modul (10) weiterhin einen Druckbehälter (20) aufweist.

7. Modul nach einem der vorhergehenden Ansprüche, **dadurch gekennzeichnet, dass** das Modul (10) weiterhin eine Elektronikeinheit (16), insbesondere eine als Remote I/O Controller bezeichnete Elektronikeinheit (16) aufweist.

8. Modular aufgebaute Prozessanlage für die Produktion eines chemischen und/oder pharmazeutischen Produktes mit mehreren Modulen, wobei zumindest eines der Module als Dosiermodul (10) nach einem der vorhergehenden Ansprüche ausgebildet ist.

9. Verfahren zum Temperieren eines Dosiersystems (24) zum Dosieren von Fluiden innerhalb eines Dosiermoduls (10), umfassend die Schritte: a) Bereitstellen eines Dosiermoduls (10) nach Anspruch 1; b) bereitstellen eines Temperiermediums zur Temperierung des Plattenwärmetauschers (34) , welches sich in einem Kreislauf mit dem Dosiersystem (10) befindet; c) temperieren des Temperiermediums.

## Claims

1. A dosing module (10), in particular for a modular process plant, having a dosing system (24) for dosing a fluid, a housing (32) at least partially enclosing the dosing system (24), and a temperature control device for controlling the temperature of the interior of the housing (32), wherein the temperature control device comprises a plate heat exchanger (34), and wherein at least part of the housing (32) is formed by at least one plate structure (36) of said plate heat exchanger (34), in particular by at least one so-called heat exchanger plate, wherein the dosing system (24) comprises a plurality of system components (28, 30) fluidically connected to one another via a pipe system (26), and wherein a pump (28) constitutes part of the system components, **characterized in that** the pump head of the pump (28) is located inside the housing (32) and the motor of the pump (28) is located outside.

2. The module according to claim 1, **characterized in that** at least one system component (28, 30) of the dosing system (24) is directly attached to the or to at least one of the plate structures (36) of the plate heat exchanger (34) forming the part of the housing (32).

3. The module according to claim 1 or 2, **characterized in that** at least part of the pipes of the pipe system (36) is designed as media-temperable pipes and/or at least one of the system components (28, 30) is media-temperable.

4. The module according to any one of claims 1 to 3, **characterized in that** the system components (28, 30) of the dosing system (24) comprise at least one of the following: a pump (28), a filter, a shut-off valve, a pressure measuring device, a temperature measuring device, a flow measuring device, and a drain valve (30).

5. The module according to one of the preceding claims, **characterized in that** the dosing module (10) comprises, in addition to the plate structure (36) of the plate heat exchanger (34), the following further components for forming the housing: a frame (12), housing parts (38) and elements (40) for thermal insulation.

6. The module according to any one of the preceding claims, **characterized in that** the module (10) further comprises a pressure vessel (20).

7. The module according to any one of the preceding claims, **characterized in that** the module (10) further comprises an electronics unit (16), in particular an electronics unit (16) designated as a remote I/O controller.

8. Modular process plant for the production of a chemical and/or pharmaceutical product with several modules, wherein at least one of the modules is constructed as a dosing module (10) according to one of the preceding claims.

9. A method of tempering a dosing system (24) for dosing fluids within a dosing module (10), comprising the steps of: a) providing a dosing module (10) according to claim 1; b) providing a tempering medium for tempering the plate heat exchanger (34) which is in circuit with the dosing system (10); c) tempering the tempering medium.

## Revendications

1. Module de dosage (10), plus particulièrement pour une installation de process modulaire, avec un système de dosage (24) pour le dosage d'un fluide, un boîtier (32) logeant au moins partiellement le système de dosage (24) ainsi qu'un dispositif de régulation de température pour la régulation de la température à l'intérieur du boîtier (32), dans lequel le dispositif de régulation de température comprend un échangeur thermique à plaques (34) et au moins une partie du boîtier (32) est constituée d'au moins une structure à plaques (36) de cet échangeur thermique à plaques (34), plus particulièrement d'au moins ce qu'on appelle une plaque d'échangeur thermique, dans lequel
le système de dosage (24) comprend plusieurs composants de système (28, 30) branchés entre eux avec écoulement par l'intermédiaire d'un système de canalisations (26) et une pompe (28) constitue une partie des composants du système, **caractérisé en ce que** la tête de pompe de la pompe (28) se trouve à l'intérieur du boîtier (32) et le moteur de la pompe (28) se trouve à l'extérieur.

2. Module selon la revendication 1, **caractérisé en ce qu'**au moins un composant du système (28, 30) du système de dosage (24) est fixé directement à la ou à l'au moins une des structures de plaques (36) de l'échangeur thermique à plaques (34), constituant une partie du boîtier (32).

3. Module selon la revendication 1 ou 2, **caractérisé en ce qu'**au moins une partie des canalisations du système de canalisations (36) est conçue comme des canalisations pouvant être régulées en température du milieu et/ou au moins un des composants du système (28, 30) peut être régulé en température du milieu.

4. Module selon l'une des revendications 1 à 3, **caractérisé en ce que** les composants du système (28, 30) du système de dosage (24) comprennent au moins un des composants suivants : une pompe (28), un filtre, une vanne d'arrêt, un dispositif de mesure de pression, un dispositif de mesure de température, un dispositif de mesure de débit et une vanne de purge (30).

5. Module selon l'une des revendications précédentes, **caractérisé en ce que** le module de dosage (10) comprend, en plus de la structure de plaques (36) de l'échangeur thermique à plaques (34), les composants supplémentaires suivants pour la formation du boîtier : un châssis (12), des parties de boîtier (38) et des éléments (40) pour l'isolation thermique.

6. Module selon l'une des revendications précédentes, **caractérisé en ce que** le module (10) comprend en outre un récipient sous pression (20).

7. Module selon l'une des revendications précédentes, **caractérisé en ce que** le module (10) comprend en outre une unité électronique (16), plus particulièrement une unité électronique (16) appelée contrôleur E/S à distance.

8. Installation de process modulaire pour la production d'un produit chimique et/ou pharmaceutique avec plusieurs modules, dans lequel au moins un des modules est conçu comme un module de dosage (10) selon l'une des revendications précédentes.

9. Procédé de régulation de température d'un système de dosage (24) pour le dosage de fluides à l'intérieur d'un module de dosage (10), comprenant les étapes suivantes : a) mise à disposition d'un module de dosage (10) selon la revendication 1 ; b) mise à disposition d'un milieu de régulation de température pour la régulation de température de l'échangeur thermique à plaques (34), qui se trouve dans un circuit avec le système de dosage (10) ; c) régulation de la température du milieu de régulation de température.
